# EUROPÄISCHE PATENTANMELDUNG

(11) **EP 1 096 175 A2**
(43) Veröffentlichungstag der Anmeldung: **02.05.2001**
(21) Anmeldenummer: 00122830.3
(22) Anmeldetag: 20.10.2000
(51) Int. Cl.: F16H 25/20, H02K 7/06

(54) **Linearantrieb**

(30) Priorität: 27.10.1999 JP 30476999
(71) Anmelder: Wittenstein GmbH & Co. KG, 97999 Igersheim (DE)
(72) Erfinder: Kojima, Masakazu, Dr.-Ing., Tokyo, 161-0031 (JP)
(74) Vertreter: Weiss, Peter, Dr.

(57) **Zusammenfassung**

Dargestellt wird ein Linearantrieb, der einen Motor (40), einen Rotations-zu-Linearbewegungskonversions-Mechanismus mit einer Spindel (60) und einer Nuss (70), einen Trägerblock (30), der ein Ende der Spindel unterstützt, und ein antriebsseitiges Trägerteil mit einem Schwingunterstützungsmechanismus (z.B. einer Schwingachse oder Trageteil im Falle eines Trunnion-Mechanismus, oder einem Schwingunterstützungstrageanteil oder Unterstützungsbein des Schwingunterstützungsträgeranteils), aufweist. Das antriebsseitige Tägerteil ist Teil des Trägerblocks, ein Erweiterungsteil des Trägerblocks oder damit verbunden. Die Schwingachse (11) des Schwingunterstützungsmechanismus befindet sich in der Ebene, die die Schraubenachse (69) enthält, und die Kraftflusslinie innerhalb des Linearantriebs ist auf die Ausgabewelle, die Nuss, die Spindel und den Trägerblock beschränkt.

## Beschreibung

Die vorliegende Erfindung betrifft einen Linearantrieb mit einem Bewegungskonversionsmechanismus von Rotation auf Linearbewegung.

Bei derzeit bekannten Linearantrieben, wie pneumatische und hydraulische Zylinder, werden typischerweise zwei Unterstützungsmethoden angewandt. Eine verwendet eine feste Unterstützung mit einem Freiheitsgrad für die Ausgabewelle, und die andere verwendet eine Schwingunterstützung mit zwei Freiheitsgraden für die Ausgabewelle. Im letzteren Fall gibt es zwei Typen von Mechanismen, der sogenannte Trunnion- (Zapfen- oder Schildzapfen-)Mechanismus und der Cievis-(oder Gabelkopf-, Haken- oder Bügel-)Mechanismus. In einem pneumatischen oder hydraulischen Zylinder kann jedes Teil des Trunnion-Mechanismus, oder Clevis-Mechanismus, ziemlich leicht an den Zylinderteilen, wie einem Zylinderendblock oder einer Zylinderröhre, angebracht werden. Dies ergibt sich daraus, dass die Zylinderteile als Kraftflussteile gestaltet sind.

In letzter Zeit nehmen Linearantriebe mit elektrischen Motoren zu. Der Motor dreht eine Schraube oder Spindel, wie eine Ballspindel etc., und eine mit der Spindel gekoppelte Nuss oder Mutter bewegt sich linear, so dass entsprechend eine Ausgabewelle, die mit der Nuss verbunden ist, sich linear bewegt. Bei diesem Typ eines Linearantriebs befindet sich der Motor hauptsächlich an einem Trägerblock, der die Spindel in Richtung der Spindelachse unterstützt und sich auf der anderen Seite der Ausgabewelle befindet.

In den derzeitigen pneumatischen und hydraulischen Zylindern wird der Clevis-Mechanismus, der einer der Schwingunterstützungsmechanismen ist, dazu verwendet, um an dem entfernten Ende des Zylinders von der Ausgabewelle positioniert zu werden. Falls für den Linearantrieb mit einem Elektromotor die gleiche Art von Clevis-Mechanismuspositionierung verwendet wird, sollte der Clevis-Mechanismus etwa am Ende des Motors positioniert werden. Allerdings ist der Motor im Allgemeinen kein krafttragendes Teil, das stark genug ausgelegt ist, um in der Lage zu sein, die Reaktionskraft auf die Ausgabewelle von einer betätigten Last zu tragen. Deshalb sollte jedes Teil des Clevis-Mechanismus auf der Seite des Motorenende sein. Tatsächlich sind jedoch Linearantriebe mit elektrisch betriebenen Motor im Allgemeinen nicht mit dem Clevis-Mechanismus ausgestattet. Entsprechend sind derartige Linearantriebe mit elektrisch angetriebenen Motor im Allgemeinen ebenso nicht mit einem Trunnion-Mechanismus ausgestattet.

Mit Hinblick auf die Anwendungen von Linearantrieben mit einem elektrischen Motor ist ein Schwingunterstützungsmechanismus, wie der Trunnion-Mechanismus oder Clevis-Mechanismus, unausweichlich.

### ZUSAMMENFASSUNG DER ERFINDUNG

Es ist Aufgabe der vorliegenden Erfindung, eine technisch und ebenso wirtschaftlich vernünftige Auswahl zur Unterstützung des Linearantriebs zur Verfügung zu stellen, so dass dieser in der Lage ist, eine Schwingungsaktion durchzuführen.

Die Aufgabe wird gelöst durch die Merkmale des Anspruchs 1. Vorteilhafte Ausführungsformen werden in den abhängigen Ansprüchen angeführt.

Entsprechend der Erfindung weist ein Linearantrieb auf:
einen Motor,
einen Rotations-zu-Linearbewegungskonversions-Mechanismus mit einer Spindel und einer Nuss,
einen Trägerblock, der ein Ende der Spindel unterstützt, und
ein antriebsseitiges Trägerteil mit einem Schwingunterstützungsmechanismus (z.B. einer Schwingachse oder Trageteil im Falle eines Trunnion-Mechanismus, oder einem Schwingunterstützungstrageanteil oder Unterstützungsbein des Schwingunterstützungsträgeranteils). Das antriebsseitige Tägerteil ist Teil des Trägerblocks, ein Erweiterungsteil des Trägerblocks oder damit verbunden. Die Schwingachse des Schwingunterstützungsmechanismus befindet sich in der Ebene, die die Schraubenachse enthält, und die Kraftflusslinie innerhalb des Linearantriebs ist auf die Ausgabewelle, die Nuss, die Spindel und den Trägerblock beschränkt.

Die Wirkung der Erfindung begründet sich darin, dass in dem elektrisch betriebenen Linearantrieb die Spindel dazu verwendet wird, um durch eine Lagerung oder durch Lagerungen in radialer oder axialer Richtung unterstützt zu werden, so dass die Spindel sich drehen kann, wobei die Achse stabil bleibt und sich nicht in axialer Richtung durch eine Reaktionskraft von einer betätigten Last, die durch die Ausgabewelle und die Nuss an der Spindel anlegt, bewegt. Das bedeutet, dass der Trägerblock, der das Spindelende unterstützt, die Rolle eines 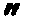 Brustknochens" (engl.: 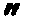 waist bone") spielt und ein krafttragendes Teil entlang der Kraftflusslinie darstellt.

Aus diesem Gesichtswinkel sind die Körperteile, die den Mechanismus aus der Spindel, der Ausgabewelle und dergleichen abdecken, die Teile, die die Ausgabewelle in radialer Richtung unterstützen, die Motorabdeckung, die Zylinderabdeckung usw. die Teile, die Funktion und Form normal halten, jedoch nicht die krafttragenden Teile.

Wenn ein Schwingunterstützungsmechanismus wie der Trunnion-Mechanismus oder der Clevis-Mechanismus verwendet wird, sollte das antriebsseitige Trägerteil des Schwingunterstützungsmechnismus durch ein krafttragendes Teil unterstützt werden.

Dementsprechend hat die Konstruktion des Mechanismus gemäß der Erfindung, worin die Schwingachse sich in der die Schraubenachse enthaltenden Ebene befindet, den Effekt, dass keine Biegemomente auf die Spindel und dementsprechend auf andere Teile als krafttragenden Teile einwirken, wenn eine Kraft auf die Spindel in Richtung der Schraubenachse angewandt wird.

Dementsprechend ist der Aufbau gemäß der Erfindung hinsichtlich der Dynamik der geeignetste.

Entsprechend der idealen Unterstützungspunktauswahlmethode in dem Schwingunterstützungsmechanismus (z.B. Trunnion, Clevis, usw.) des Linearantriebs, spielen die für die krafttragenden Teile benötigten Teile ein Rolle, um Reaktionskräfte der Lastbetätigung zu unterstützen. Dementsprechend wirkt kein Biegemoment auf Leichtgewichtsteile und nur auf die krafttragenden Teile. Entsprechend wird ein wirtschaftliches Maschinengestalten mit Leichtgewichtsteilen, die die minimal geforderte Festigkeit aufweisen, möglich in einem Linearantrieb, der elektrisch betätigt ist. Dies erlaubt eine geringe Größe, leichtes Gewicht und eine minimale Anzahl von krafttragenden Teilen.

### KURZE BESCHREIBUNG DER ZEICHNUNGEN

Die Erfindung wird im Folgenden weiter unter Heranziehung der Zeichnungen erläutert, wobei sich gleiche Referenzzeichen auf funktional gleiche oder ähnliche Merkmale beziehen.
Figur 1 zeigt eine Übersichts- und teilweise Querschnittsansicht eines Linearantriebs mit einem Trunnion-Mechanismus entsprechend der Erfindung;
Figur 2 ist eine Seitenansicht von Figur 1;
Figur 3 ist eine Gesamtansicht des Linearantriebs mit Clevis-Mechanismus entsprechend der Erfindung;
Figur 4 ist eine Seitenansicht von Figur 3;
Figur 5 ist eine Gesamtansicht eines anderen Linearantriebstypus mit einem Trunnion-Mechanismus entsprechend der Erfindung;
Figur 6 zeigt eine Gesamtansicht eines anderen Typus eines Linearantriebs mit einem Trunnion-Mechanismus entsprechend der Erfindung;
Figur 7 ist eine Gesamtansicht eines anderen Typus des Linearantriebs mit einem Clevis-Mechanismus entsprechend der Erfindung.

### DETAILLIERTERE BESCHREIBUNG DER ZEICHNUNGEN

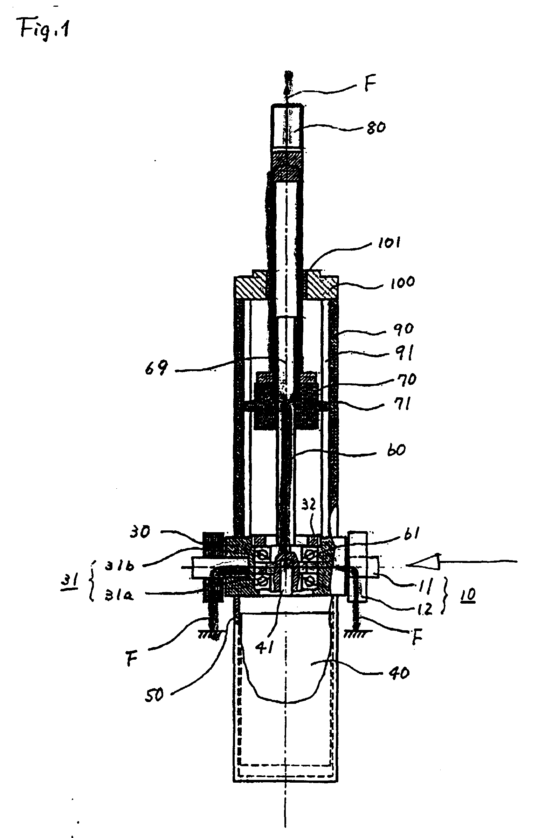

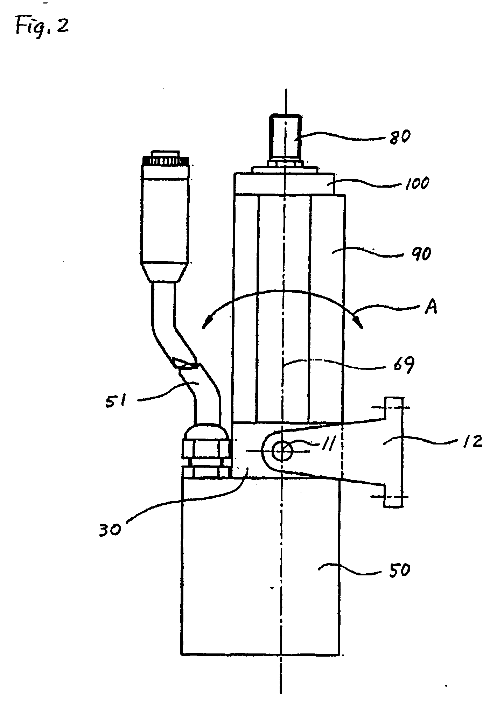

Die Figuren 1 und 2 zeigen ein Beispiel entsprechend der Erfindung einer ersten Ausführungsform eines Linearantriebs mit einem elektrisch betätigten Motor, der durch einen Trunnion-Mechanismus unterstützt wird, als einem der Schwingunterstützungsmechanismen.

Eine Schraube oder Spindel 60 wird durch einen Trägerblock 30 unterstützt, so dass die Spindel 60 sich nicht in Richtung einer Spindelachse 69 bewegt, sondern sich in der Spindelachse unter Verwendung zweier gewinkelter Lager 31 (eines ist 31a und das andere ist 31b) dreht. Die Lager 31 werden in dem Trägerblock 30 gehalten, halten ein Kranzteil 61a an einem Endbereich 61 der Spindel 60, und werden an den Trägerblock 30 durch eine Lagermutter 32 befestigt.

Ein Motor 40 wird mit Schrauben an dem Trägerblock 30 befestigt, wobei eine Motorenachse 41 in eine Öffnung an dem Endstück 61 der Spindel eingeführt wird, und durch einen Satz Schrauben befestigt, was nicht in Figur 1 dargestellt ist.

Die Spindel 60 ist eine sogenannte Ballspindel, und eine Nuss oder Mutter 70 koppelt an die Spindel 60. Die Nuss hat zwei Stifte 71, die mit einer Führungsaussparung 91 koppeln, die an einer Zylinderabdeckung 90 ausgeführt ist und sich parallel zu der Schraubenachse 69 befindet. Dementsprechend bewegt sich die Mutter 70 linear in Entsprechung zu einer Rotation der Spindel 60.

Eine Ausgabewelle 80 ist mit der Nuss 70 verbunden und wird durch ein Lager 101 geführt, dass in einem Enddeckel 100 gehalten wird.

Der Motor 40 wird durch eine Motorabdeckung 50 abgedeckt, um Staub und Wasser heraus zu halten. Eine elektrische Verdrahtung zum Antreiben des Motors kann nach innen über die Motorabdeckung 50 geführt werden.

Es ist ersichtlich, dass wenn eine Last von der Antriebswelle 80 betrieben wird, die Torsionskraft und die Kraft übertragen wird auf einer Linie aus dem Motor 40, dem Trägerteil der Spindel 60 (den gewinkelten Lagern 31 und dem Trägerblock 30), der Spindel 60, der Nuss 70 und der Ausgabewelle 80. Die anderen Mechanismusteile als die Teile auf der Kraftübertragungslinie können deshalb derart ausgeführt werden, dass sie nur eine minimale Festigkeit aufweisen müssen, um die Funktion und Form des Antriebs wie gefordert aufrecht zu erhalten. Natürlich sollten diese Teile derart gestaltet werden, dass sie nur minimale Kosten aufweisen und müssen nicht ausgeführt werden, um als Unterstützungsteile des Antriebs verwendet werden zu können.

Die Kraftflusslinie innerhalb des Antriebs zur Unterstützung der Reaktionskraft auf die lastbetreibende Kraft führt von der Ausgabewelle 80 auf das Trägerteil der Spindel 60 durch die Nuss 70 und die Spindel 60. Schließlich wird das Trägerteil durch den Trägerblock 30 dargestellt.

In dieser Ausführungsform der vorliegenden Erfindung wird eine Schwingachse 11 eines Trunnion-Mechanismus bereitgestellt, um die Bedingung 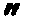 auf den Trägerblock 30" und 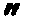 auf der die Spindelachse 69 enthaltenden Ebene" als das antriebsseitige Trägerteil zu erfüllen. Dies erfüllt die Bedingungen, dass kein Biegemoment, wie gezeigt durch einen Pfeil A, aus irgendeinem Teil des Antriebs resultiert, wenn die Ausgabewelle 80 die Last betätigt und eine Reaktionskraft trägt. Dieses stellt deshalb den besten und idealen Weg zur Unterstützung des Antriebs in einer Weise, dass der Trägerblock 30 die Rolle des Trägerteils des Antriebs spielt, dar.

Wenn kein Raum für die Schwingachse 11 auf dem Trägerblock 30 besteht, kann die Schwingachse auf dem erweiterten Teil des Trägerblocks 30, das an den Trägerblock 30 angebracht werden kann, dargebracht werden. Die Unterstützungswirkung ist die gleiche wie oben beschrieben.

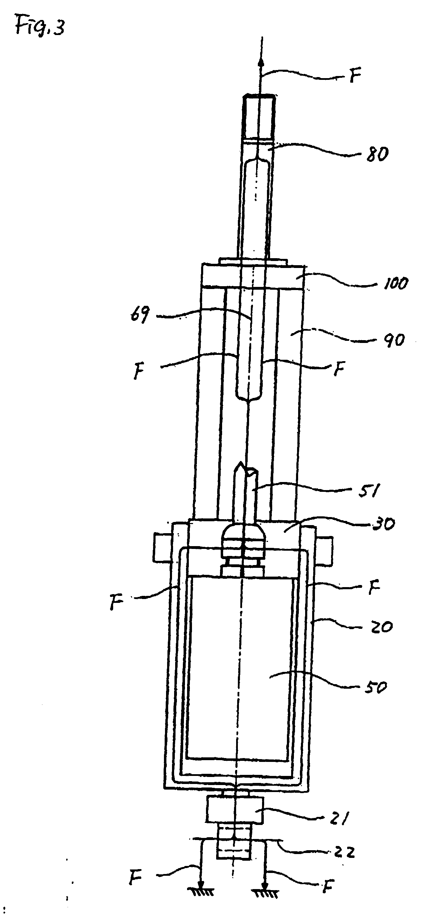

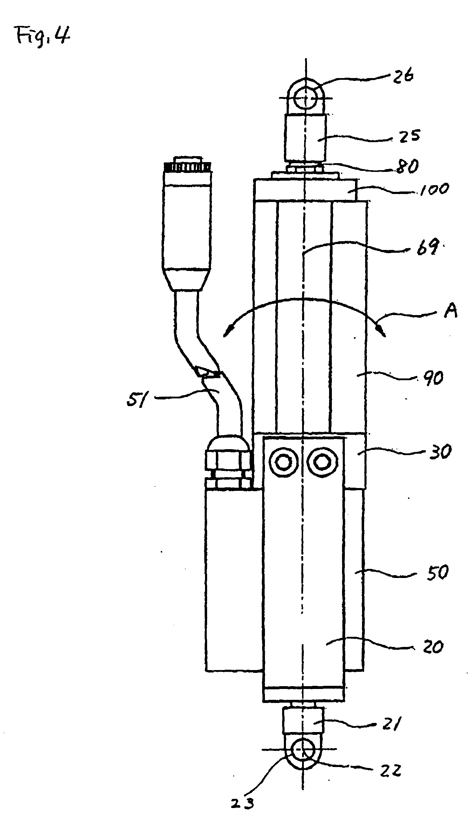

Die Figuren 3 und 4 zeigen ein Beispiel einer weiteren Ausführungsform gemäß der vorliegenden Erfindung, die einen Linearantrieb mit einem elektrischen Motor aufweist, der durch einen Clevis-Mechanismus unterstützt wird, der ebenfalls einer der Schwingunterstützungsmechanismen ist.

Ein Armteil 20 des Clevis-Mechanismus wird angeführt, das einen Anteil 21 hat, worin eine Lagerausparung mit einer Schwingachse 22 zur Verfügung gestellt ist. Das Armteil spielt die Rolle, um den Anteil 21 mit dem Trägerblock 30 zu verbinden, und wird mittels Schrauben an den Trägerblock befestigt. Die Schwingachse 22 ist hier in der die Spindelachse 69 aufweisenden Ebene vorgesehen.

Wie im Falle des Trunnion-Mechanismus (vergleiche die erste Ausführungsform der Erfindung), resultiert kein Biegemoment, wie durch den Pfeil A angedeutet, aus irgend einem Teil des Antriebs, wenn die Ausgabewelle 80 die Last betreibt und eine Reaktionskraft aufnimmt. Dies ist dementsprechend ebenso ein idealer Weg um den Antrieb zu unterstützen.

In den beiden Fällen der ersten und zweiten Auführungsform der Erfindung wird der Trägerblock 30 zum Zwecke der Festigkeit vorzugsweise aus Stahl hergestellt. Dickes Aluminium kann ebenso verwendet werden.

Die Motorenabdeckung 50 und die Zylinderabdeckung 90 werden zum Zwecke des leichten Gewichts vorzugsweise aus dünnem Aluminium hergestellt. Plastikmaterialien können ebenso für den gleichen Zweck verwendet werden.

Die Figuren 3 und 4 zeigen einen anderen Typus des Betätigungsendes der Ausgabewelle 80. Dieser Typus der Ausgabewelle 80 erweist eine höhere Effektivität zusammen mit den Unterstützungsmethoden dieser Erfindung. Ein Betätigungsende 25 mit einer Lageraussparung 26 befindet sich an dem Ende der Ausgabewelle 80, und die Zentrallinie der Lageraussparung 26 befindet sich in der Ebene, die die Zentrallinie der Lageraussparung 23 und der Spindelachse 69 umfasst.

Im Falle dieses Betätigungsendes 25, ergeben sich von den betätigten Lasten Reaktionskräfte auf die Ausgabewelle 80 nur in Richtung der Ausgabewellenachse, selbst wenn das betätigte Objekt (Last) in irgend einer Weise geführt wird. Dementsprechend kann die Ausgabewelle 80 in der dünnsten Dimension ausgeführt werden, in Kombination mit der Unterstützungsmethode dieser Erfindung und dem Betätigungsende 25.

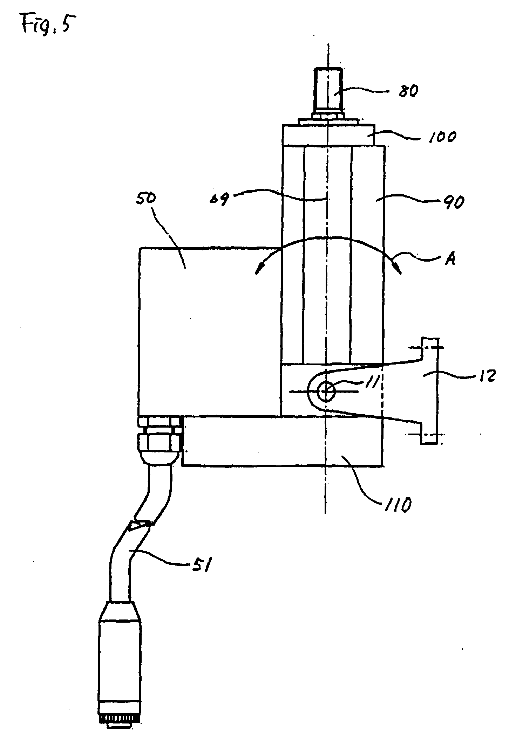

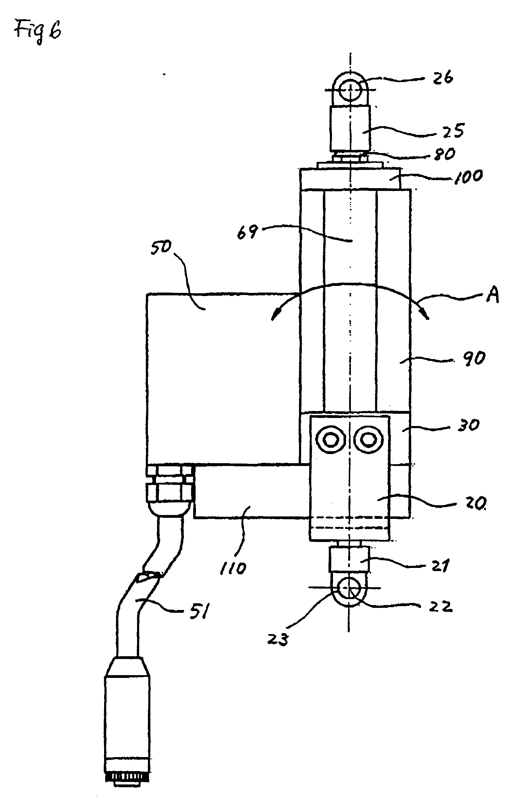

Die Figuren 5 und 6 zeigen weitere Beispiele der Kombination zwischen dem Antrieb und der Unterstützungsmethode dieser Erfindung. In beiden Fällen ist der Motor des Antriebs um 180 Grad gedreht, und die Länge des Antriebs ist verkürzt. Der Mechanismus, um den Motor und die Spindel zu verbinden, wird durch einen Satz Einstellungs- oder Feststellungsriemen und einer Rolle bewerkstelligt und befindet sich in einem Verbindungsblock 110. Getriebeverbindungen können ebenso verwendet werden.

## Patentansprüche

1. Ein Linearantrieb aufweisend:
einen Bewegungskonversionsmechanismus von Spindelrotation zu Linearbewegung einer Ausgabewelle mit einer Nussankopplung an die Spindel,
einen Trägerblock zum Unterstützen eines Endes der Spindel, und
ein antriebsseitiges Trägerteil, das einen Schwingunterstützungsmechanismus hat als Teil des Trägerblocks oder eines Erweiterungsteils des Trägerblocks oder das damit verbunden ist,
dadurch gekennzeichnet, dass die Schwingachse des Schwingunterstützungsmechanismus sich in einer die Spindelachse enthaltenden Ebene befindet, und dass der Kraftfluss innerhalb des Linearnatriebs auf die Ausgabewelle, die Nuss, die Spindel und den Trägerblock begrenzt ist.

2. Der Linearantrieb nach Anspruch 1, worin der Schwingunterstützungsmechanismus ein Trunnion-Mechanismus ist.

3. Der Linearantrieb nach Anspruch 1, worin der Schwingunterstützungsmechanismus ein Clevis-Mechanismus ist.
